# EUROPEAN PATENT APPLICATION

(11) **EP 1 239 212 A1**
(43) Date of publication of application: **11.09.2002**
(21) Application number: 02251641.3
(22) Date of filing: 08.03.2002
(51) Int. Cl.: F16M 11/00, F16B 25/00, H05K 5/02, G06F 1/18

(54) **Attachment fixture, cabinet stand, and article attachment method**

(30) Priority: 08.03.2001 JP 2001065714
(71) Applicant: Sony Computer Entertainment Inc., Tokyo 107-0052 (JP)
(72) Inventor: Momiyama, Hiroaki, C/o Sony Corporation, Tokyo 141-0001 (JP)
(74) Representative: Hedley, Nicholas James Matthew

(57) **Abstract**

An article attachment method for attaching a stand (20) that includes at least one through-hole (40), to a cabinet that includes at least one groove (14), is provided. The stand is attached to the cabinet by aligning the grooves (14) in the cabinet with the through-holes (40) in the stand, inserting attachment fixtures (24) through the through-holes, positioning the minor axis parts of attachment parts (52) in the attachment fixtures so as to face the side walls of grooves (14) on the cabinet, rotating the attachment fixtures by a prescribed angle in one direction, and positioning the major axis parts of the attachment parts so as to face the side walls of grooves.

## Description

### FIELD OF THE INVENTION

This invention relates to an attachment fixture for attaching an article to another article, a cabinet stand having said attachment, and an attachment method for attaching an article to another article.

### BACKGROUND OF THE INVENTION

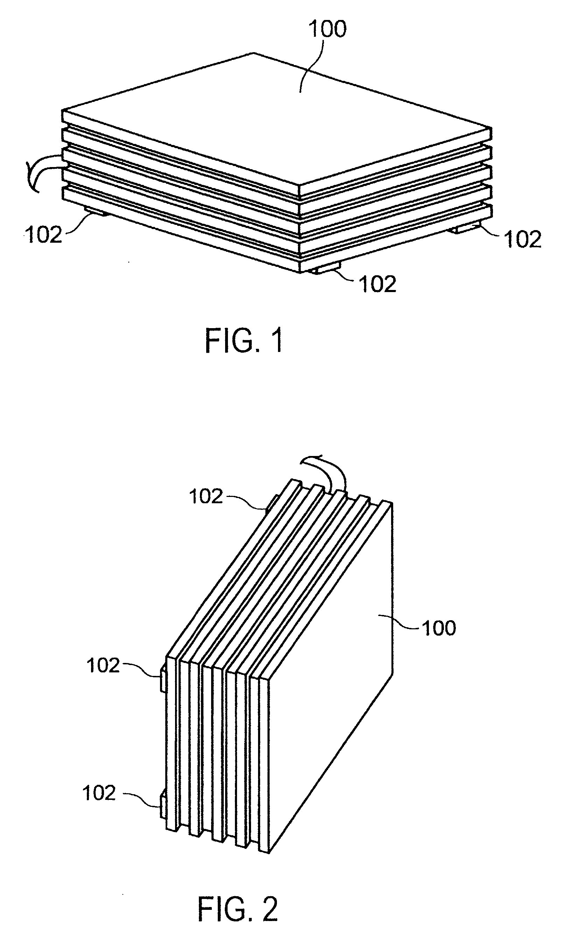

In general, various horizontal type main-body devices of personal computers, their external memories and other peripheral equipments, audiovisual equipments and so on are configured to place in the horizontal orientation, for example, by providing leg parts 102 on the bottom surface of the device main body 100, as shown in Figure 1, so that they can be used in a stable condition.

However, in order to save space for installation, it has been required to use such a device main body 100 in the vertical orientation as well. In order to realize this requirement, it has been needed to make it possible to use the device main body 100 not only in the horizontal orientation but also in the vertical orientation, without modifying its design shape. As shown in Figure 2, simply placing a horizontal type device main body 100 in vertical orientation makes it unstable, because its base area becomes relatively small. Thus, there have been proposed stands for preventing a horizontal type device main body from toppling over in the vertical orientation.

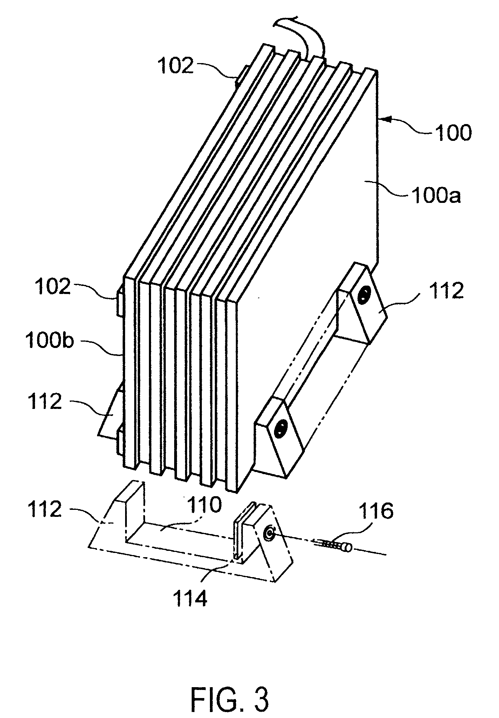

In one example, stands 112 as shown in Figure 3 are prepared, each stand having a rectangular indentation or depression 110 that is roughly the same as or slightly larger than the width of device main body 100. Stands 112 are attached to device main body 100 by pressing it against the body by means of tightening screws 116, wherein damage prevention spacers 114 are interposed between the body and the respective stands so as not to damage device main body 100. In general, such stands 112 are used to prevent tumble of device main body 100.

The example of Figure 3 illustrates that stands 112 are attached to device main body 100 at two locations, one at front and the other at rear, but the front and rear stands 112 may be suitably joined to form an integral stand, as indicated by the dotted lines of alternating long and two short dashes ("two-dot chain lines").

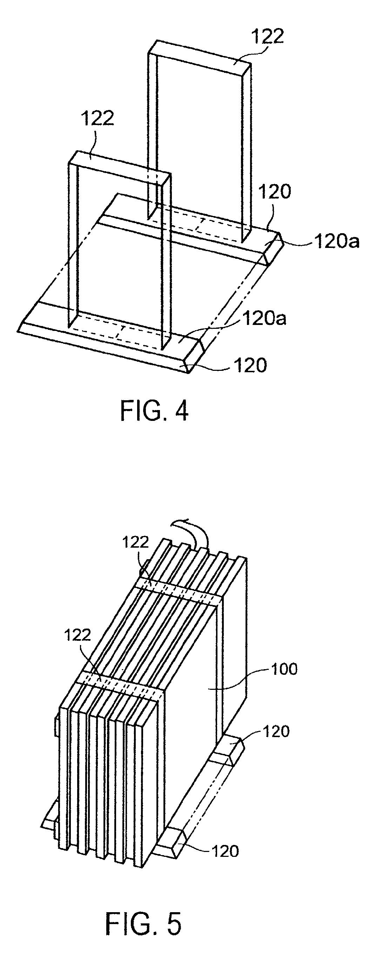

In another example, board-shaped stands 120 as shown in Figures 4 and 5 are used, each stand having a securing belt 122 such as fabric belt, stretchable rubber belt or the like that is secured to mounting surface 120a of the stand on which, for example, the device main body is mounted. In this case too, as shown in Figure 5, stands 120 are attached to device main body 100 in two locations, one in front and the other in rear, but the front and rear stands 120 may be suitably joined to form an integral stand, as shown by the two-dot chain lines.

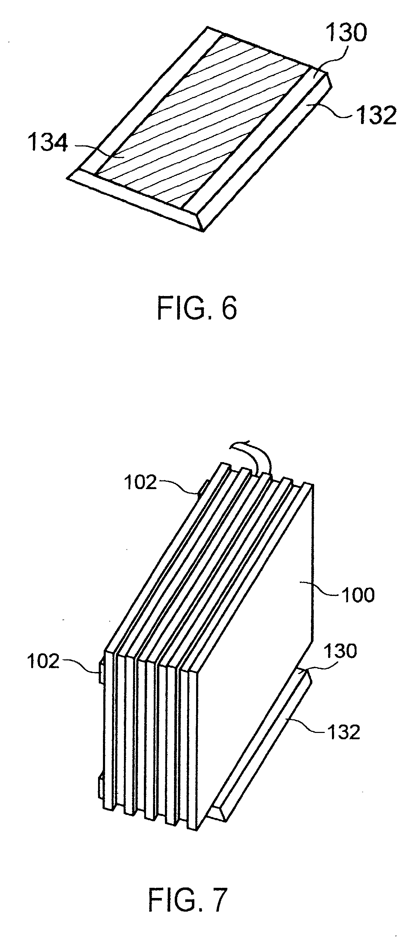

Further in another example, a board-shaped stand 132 as shown in Figure 6 is used. The stand has a mounting surface 130 of relatively small area, and device main body 100 is secured by an adhesive to mounting surface 130 of said stand 132 as shown in Figure 7. In Figure 6, region 134 indicated by the slanting lines is the part that is coated with adhesive.

However, in the example shown in Figure 3, it is necessary to include damage prevention spacers 114 because of the danger of scratching or otherwise damaging device main body 100 by part of stand 112 being pressed against and coming into contact with side surfaces 100a and 100b of device main body 100. This creates problems that the number of parts becomes large, and that the size of stand 112 itself becomes relatively large, which makes meaningless the purpose of saving space for installation by placing device main body 100 in the vertical orientation.

Moreover, upon carrying around device main body 100 to which stand 112 is attached, if the user holds stand 112 side with device main body 100 upside-down, device main body 100 is possible to come loose and fall off from stand 112. Therefore, frictional force or securing force is necessary to ensure that device main body 100 does not fall off. In the example of Figure 3, device main body 100 is supported by contact between damage prevention spacers 114 and one side surface 100a of device main body 100 and by contact between the sidewall of stand 112 and the other side surface 100b of device main body 100. In order to ensure sufficient frictional force or securing force, it is necessary to make the area of each contact surface between device main body 100 and stand 112 large or to make damage prevention spacers 114 of a material that has large frictional force. This might increase the manufacturing cost of stand 112.

In the example of Figures 4 and 5, installation space can be saved, because securing belts 122 are merely put on device main body 100. But when carrying around device main body 100 to which stand 120 is attached, fastening force and belt strength are necessary to ensure that device main body 100 will not come loose from stand 120 by holding the stand 120 side with device main body 100 upside-down. To ensure this fastening force, a material of relatively high elastic force can be chosen for securing belt 122, but this might make it difficult for the user to manually loop high-elastic-force securing belt 122 over device main body 100.

In the example of Figures 6 and 7, device main body 100 is affixed to stand 132 by an adhesive, so it is difficult or impossible to remove stand 132 from the main body. Moreover, when the main body is placed in the horizontal orientation, it cannot be installed horizontally, so the main body device cannot fully function, and such placement might detract from its appearance.

### SUMMARY OF THE INVENTION

In view of such problems, the purpose of this invention is to provide an attachment fixture, cabinet stand, and article attachment method whereby, for example, there is no need to alter the design shape of a device main body for attaching a stand to the device main body, the stand can be securely attached to the device main body, and the stand can be removed easily from the device main body.

A further purpose of this invention is to provide an attachment fixture for attaching a cabinet that houses electronic apparatus to a cabinet stand, a cabinet stand that has said attachment fixture, and an attachment method for these.

In one aspect of this invention, there is provided an attachment fixture comprising a head part and an attachment part extending longitudinally from said head part, the attachment part including a major axis part having a major axis along a first direction and a minor axis part having a minor axis along a second direction, said first and second directions being diameter parts contained in the plane that is perpendicular to said longitudinal direction, and the head part being shaped so as to extend in the first direction of said two directions.

When this attachment fixture is used, for example, to attach one article to another, the attachment part is advanced through one article toward the other and then rotated, whereby, since the attachment part includes the major axis part having a major axis along the first direction and the minor axis part having a minor axis along the second direction, a portion of the attachment part engages with the other article, and as a result the one article is attached to the other article. Of course, rotation in the opposite direction releases the engaged portion of said attachment part from the other article, making it easy to remove the one article from the other article.

Also, since the head part is shaped so as to extend along the first direction of said two directions, it possible to easily confirm the directionality when the attachment part is advanced to said other article, thereby to simplify the attachment operation.

Also, in said configuration, said attachment part may be made so that a screw thread ridge is formed on said major axis part. In this case, the screw thread ridge screwed into said other article, so that the one article can be securely attached to the other article.

In another aspect of this invention, there is provided a cabinet stand for supporting a cabinet that includes at least one groove therein, the cabinet stand comprising a stand main body including at least one through-hole, and an attachment fixture for attaching the stand main body to said cabinet by inserting it through said through-hole in said stand main body and rotating it in one direction, wherein said attachment fixture has a head part including a portion that is larger than the diameter of said through-hole, and an attachment part extending longitudinally from said head part and being sized so as to go through said through-hole; and also wherein the attachment part includes a major axis part having a major axis along a first direction and a minor axis part having a minor axis along a second direction, said first and second directions being contained in the plane that is perpendicular to said longitudinal direction; and further wherein said major axis is longer than the distance between the side walls in said cabinet groove, and said minor axis is shorter than the distance between said side walls.

In one embodiment, the attachment part includes the major axis part having a major axis along the first direction and the minor axis part having a minor axis along the second direction. Thus, by inserting the attachment part of the attachment fixture through the through-hole of the stand main body into the groove of the cabinet, and then rotating the attachment fixture, a portion of the attachment part engages with the side walls of the groove in the cabinet because of the anisotropy of the external shape of the attachment part, whereby the stand main body is attached to the cabinet.

In one embodiment, the attachment part includes the major axis part having a major axis along the first direction and the minor axis part having a minor axis along the second direction, and said major axis is longer than the distance between the side walls in said cabinet groove, while said minor axis is shorter than the distance between said side walls. Thus, when inserting the attachment part of the attachment fixture into the cabinet groove, the attachment part is inserted into the groove simply, by creating a state in which the major axis part lies along the groove, that is, a state in which the minor axis parts are facing to the sidewalls. And by rotating the attachment part in one direction, the major axis part engages with the sidewalls, whereby the stand main body is attached to the cabinet.

The head part on said attachment fixture may be shaped so as to extend along the first direction of said two directions. That is, by shaping the head part so as to extend in correspondence with the major axis part or minor axis part in the attachment part, upon inserting the attachment part into the groove of said cabinet, it is simple to recognize the insertion direction by confirming the position of the head, whereby wrong insertion of the attachment fixture can be prevented.

Also, in said configuration, with regard to said attachment part in said attachment fixture, a thread ridge may be formed on said major axis part. This makes it possible to securely attach the stand main body to the cabinet, because the thread ridge is screwed into the sidewalls of the groove in the cabinet.

In addition, stoppers may be provided on said stand main body to keep the range of rotation of said attachment fixture within a prescribed range. This makes it simple for the user to recognize how far the attachment fixture may be rotated, and can make the operability more efficient.

In another aspect of this invention, there is provide an article attachment method for attaching a first article including at least one through-hole to a second article including at least one groove, wherein said first article is attached to said second article by aligning said through-holes in the first article with said grooves in the second article, inserting the attachment fixture through said through-hole, positioning the minor axis part of the attachment part of the attachment fixture so as to face the side walls of said groove, rotating said attachment fixture by a prescribed angle in one direction, and positioning the major axis part of said attachment part so as to face the side walls of said groove. Thus in attaching the first article to the second article, the first article can be securely attached to, and easily removed from the second article without having to modify the design shape of the second article.

In another aspect of this invention, there is provide an electronic apparatus comprising an apparatus main body, a cabinet in which the apparatus main body is housed, and a cabinet stand for installing the cabinet, wherein the cabinet includes at least one groove, and wherein the cabinet stand comprises a stand main body including at least one through-hole, and an attachment fixture for attaching the stand main body to the cabinet by inserting the attachment fixture through said through-hole of the stand main body and rotating said attachment fixture, and further wherein the attachment fixture comprises a head part including a portion that is larger than the diameter of said through-hole, and an attachment part extending longitudinally from said head part and being sized so as to go through said through-hole; and also wherein the attachment part includes a major axis part having a major axis along a first direction and a minor axis part having a minor axis along a second direction, said first and second directions being contained in the plane that is perpendicular to said longitudinal direction, said major axis being longer than the distance between the side walls in said cabinet groove, and said minor axis being shorter than the distance between said side walls.

### BRIEF DESCRIPTION OF THE DRAWINGS

Figure 1 is a perspective view of a horizontal type prior art device placed in the horizontal orientation.

Figure 2 is a perspective view of a horizontal type prior art device placed in the vertical orientation.

Figure 3 is an explanatory diagram showing an example of use with a stand relating to the device of Figure 1.

Figure 4 is a perspective view showing a second example of a prior art stand.

Figure 5 is a perspective view showing use of the stand of Figure 4.

Figure 6 is a perspective view showing a third example of a prior art stand.

Figure 7 is a perspective view showing use of the stand of Figure 6.

Figure 8 is an exploded perspective view showing the stand of the present invention, together with the cabinet.

Figure 9 is a front view showing the stand of the present invention, together with the cabinet.

Figure 10 is a cross-sectional view showing the attachment of the stand with the cabinet.

Figure 11 is a side view showing, with part cut away, the stand of the present invention attached to the cabinet.

Figure 12 is a bottom view showing the stand of the present invention attached to the cabinet.

Figure 13 is a perspective view showing the attachment fixture of the present invention.

Figure 14A is a plan view of the attachment fixture of Figure 13, Figure 14B is its side view, and Figure 14C is its front view.

Figures 15A and 15B illustrate the formation of the attachment part of the attachment fixture of the present invention.

### DESCRIPTION OF THE PREFERRED EMBODIMENTS

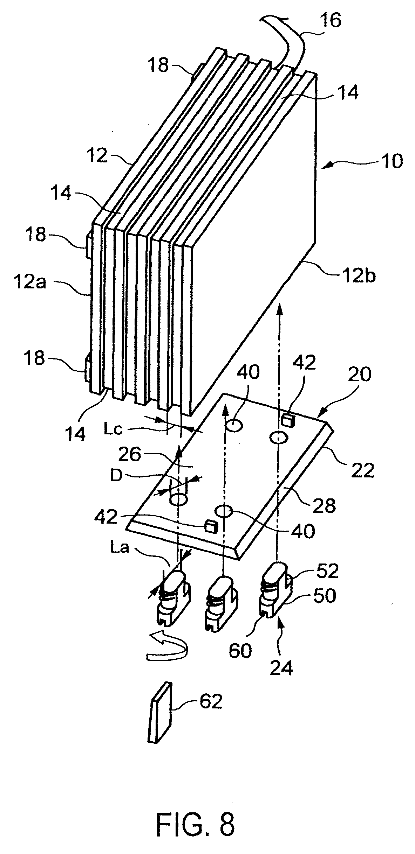

Referring to Figures 8-14, the attachment fixture, cabinet stand, and article attachment method relating to this invention are described herein below, by taking as an example an embodiment that applies to the case in which various horizontal types of electronic apparatus are attached to a stand and are used in vertical orientation. Also, these various types of electronic apparatus cover personal computers, their external memory devices, audiovisual apparatus, etc.

### (Cabinet Stand for Electronic Apparatus placed in vertical orientation)

As shown in Figure 8, an electronic apparatus 10 has a main body that is housed inside a cabinet 12, and multiple grooves 14 formed around the substantially entire circumference of cabinet 12 (the side part of the cabinet in horizontal orientation). These grooves 14 are formed for artistic design requirements and are not formed on the rear side of electronic apparatus 10 (the side to which power line 16 is connected). Cabinet 12 is formed of a synthetic resin such as ABS (acrylonitrile butadiene styrene resin).

Also, four legs 18 are provided on side surface 12a when cabinet 12 is put in vertical orientation (the base in horizontal orientation) for the purpose of raising side surface 12a from the installation surface in order to dissipate heat efficiently.

Stand 20 comprises stand main body 22, which is formed in a roughly board shape, and multiple attachment fixtures 24, which will be described below. Also, note that in Figure 8 these attachment fixtures are pictured relatively large (not to scale) for electronic apparatus 10 and stand 20 in order to make their shape easy to understand.

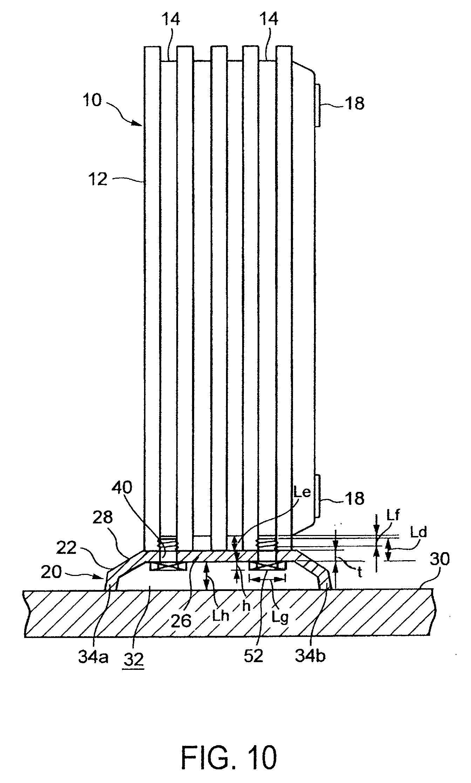

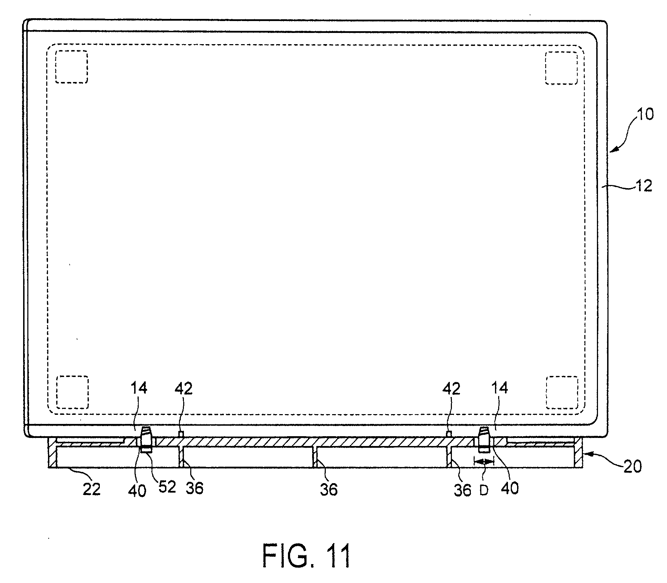

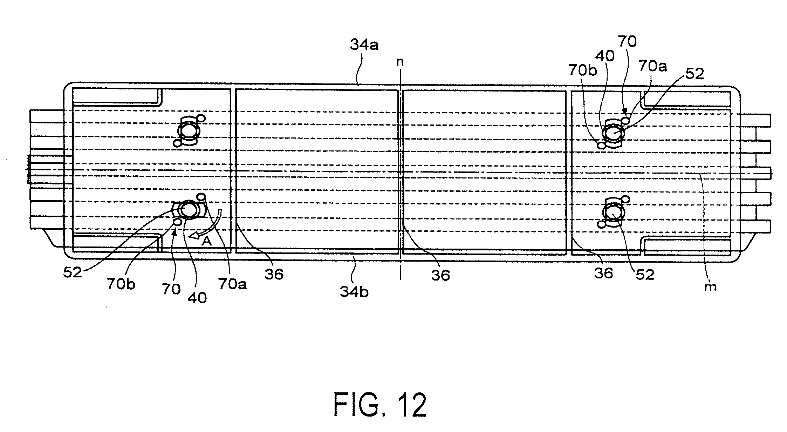

As shown in Figures 8-10, stand main body 22 has cabinet mounting part 26, whose top surface is flat, its both sides have tapered surfaces 28, which slants downward toward the outside, and space 32 is defined between the bottom surface of cabinet mounting part 26 and stand installation surface 30. This stand installation surface 30 means the surface on which stand 20 is installed, and refers to, for example, the top surface of a desk, etc. (see Figure 10). Inside this space 32, multiple (three, in example of Figures 11 and 12) reinforcing plates 36 are formed integrally between a pair of side walls 34a and 34b that are formed in the lengthwise direction of stand main body 22, and reinforce the strength of cabinet mounting part 26 and prevent it from falling into said space 32.

Multiple (four, in the example of Figure 8) through-holes 40 are formed in cabinet mounting part 26 of stand main body 22. As shown in Figure 12, through-holes 40 are formed at positions symmetrical with respect to the midline m extending along the lengthwise direction of stand main body 22 and also at positions symmetrical with respect to the midline n extending along the width direction of stand main body 22 (see Figure 12). Thus the positions of through-holes 40 are set so as to stabilize the attachment state of cabinet 12 when, as described below, attachment fixtures 24 are advanced into cabinet 12 through through-holes 40 and then cabinet 12 is attached to stand 20.

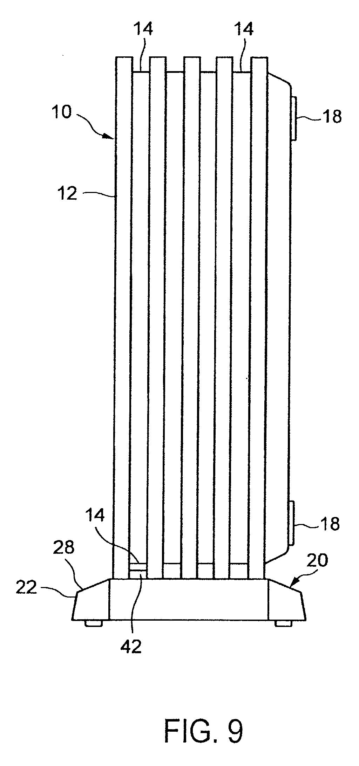

Also, as shown in Figure 8, multiple projections 42 that project upward (toward electronic apparatus 10) are formed integrally on the top surface (the mounting surface) of cabinet mounting part 26 of stand main body 22. As shown in Figure 9, these projections 42 are formed in a size and position so as to grip the inside of grooves 14 formed in the bottom surface of cabinet 12.

Moreover, in this embodiment, the positions of projections 42 are determined so that when the bottom surface of cabinet 12 and the mounting surface of stand main body 22 are made to abut against each other, and projections 42 on the mounting surface of stand main body 22 are inserted toward the interior of grooves 14 in the bottom surface of cabinet 12, multiple through-holes 40 in cabinet mounting part 26 of stand main body 22 are automatically positioned to align with the corresponding grooves 14 in the bottom surface of cabinet 12 match. That is, said projections 42 function as positioning members for mounting cabinet 12 on stand 20.

### (Attachment Fixture)

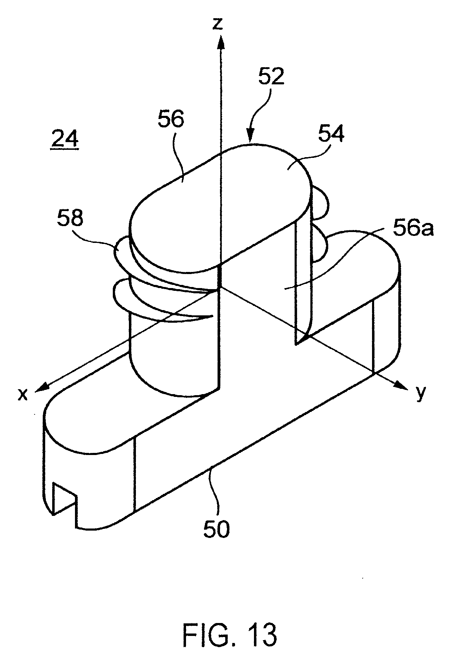

Stated briefly, attachment fixture 24 corresponds to a deformed screw. As shown in Figure 13, it consists of head part 50 which is rotationally driven by a screwdriver in the attachment state, and attachment part 52 which is screwed into another member.

As shown in Figure 13, attachment fixture 24 has head part 50 and attachment part 52 extending from head part 50 in the longitudinal direction (the z-axis direction), and these parts are integrally formed of stainless steel, for example. This attachment fixture 24 is configured in such a way that the external shape of attachment part 52 has anisotropy in two directions (the x-axis direction and the y-axis direction) which are contained in the plane (the x-y plane) that is perpendicular to said longitudinal direction (the z-axis direction).

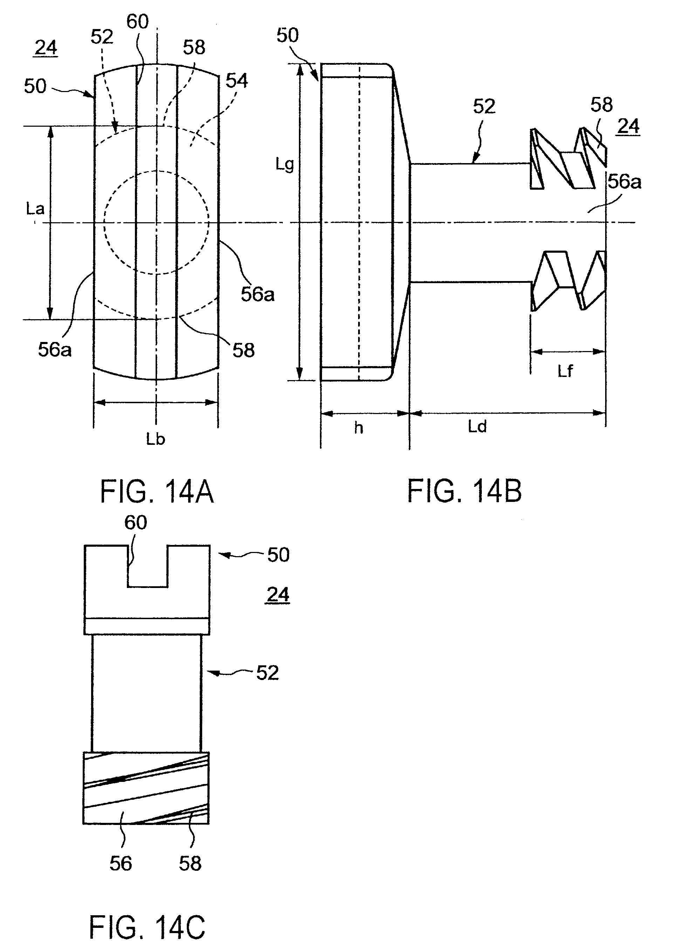

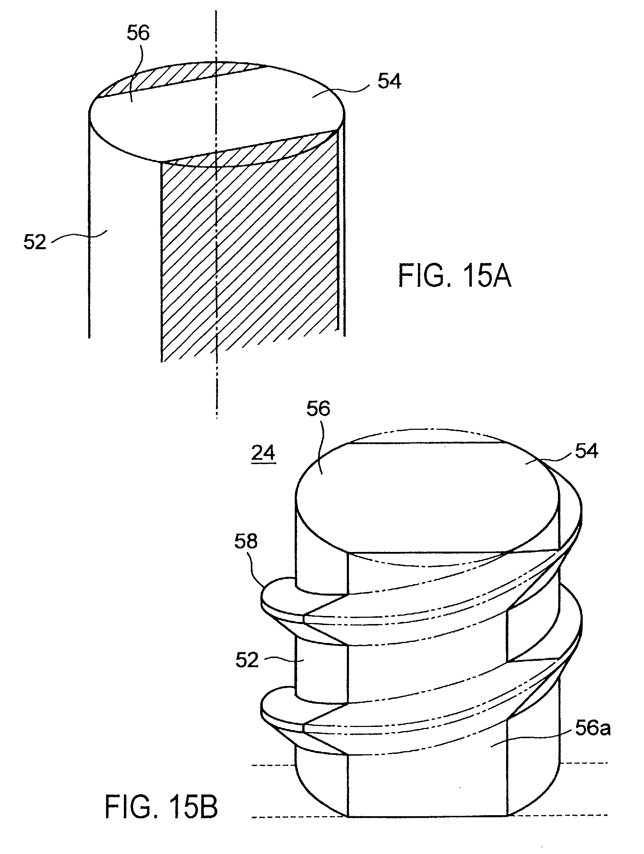

Specifically, as shown in Figures 15A and 15B, attachment part 52 is formed by cutting thread on a cylinder, and then by cutting away the side portion in parallel. Attachment part 52 thus formed has major axis part 54 having major axis La in the x-axis direction, and minor axis part 56 having minor axis Lb in the y-axis direction (see Figure 14A). In major axis part 54, each end face thereof is formed in circular-arc shape, and on its upper part, thread ridges 58 are formed up to a given range from the end of attachment part 52. Minor axis part *56,* whose end faces 56a are made flat, has flat surfaces that continue as far as head part 50. Alternatively, the cross-sectional shape of attachment part 52 may be formed in that like a track-and-field track.

As shown in Figure 14A, said major axis La of attachment part 52 denotes the distance between the tops of screw thread ridge 58 on the end faces of major axis part 54, and minor axis Lb denotes the distance between end faces 56a of minor axis part 56.

Head part 50 of attachment fixture 24 has a shape that extends along the x-axis direction, and formed in its top is a groove 60 of a size to accommodate the insertion of, for example, the tip of a flat-bladed screwdriver or the edge of a coin. Figure 8 shows the state in which the tip 62 of a flat-bladed screwdriver rotates attachment fixture 24.

Now, the relationships in size between said attachment fixtures 24, said through-holes 40 of stand main body 22, and said grooves 14 of cabinet 12 will be described.

As shown in Figure 8, major axis La of attachment part 52 in attachment fixture 24 is set smaller than diameter D of through-hole 40 and larger than distance Lc between the side walls of groove 14 in cabinet 12. Specifically, major axis La of attachment part 52 is set to be such a length that thread ridge 58 on major axis part 54 will be screwed into the inside of the side walls of groove 14 of cabinet 12.

Also, as shown in Figure 10, height Ld of attachment part 52 (see also Figure 14B) is set larger than thickness t of cabinet mounting part 26 of stand main body 22 and to be no greater than the total dimension of thickness t of cabinet mounting part 26 plus depth Le of groove 14. Also, length Lf of the threaded portion (see also Figure 14B) is set to be no greater than said depth Le of groove 14.

On the other hand, maximum length Lg of head part 50 (see also Figure 14B) is set larger than diameter D of through-hole 40, and height h of head part 50 (see also Figure 14B) is set to be no greater than height Lh of space 32 in stand main body 22.

Next, the method for attaching stand 20 to cabinet 12 will be described.

First, bottom surface 12b of cabinet 12 and the top surface of cabinet mounting part 26 of stand main body 22 are made to abut against each other, and projections 42 on the mounting surface of stand main body 22 are inserted into respective grooves 14 on the bottom surface of cabinet 12. At this time, positioning is automatically done so that through-holes 40 on cabinet mounting part 26 of stand main body 22 and corresponding grooves 14 in bottom surface 12b of cabinet 12 align to each other.

Then, attachment parts 52 of attachment fixtures 24 are inserted into grooves 14 of cabinet 12 through through-holes 40 from the bottom surface of cabinet mounting part 26 of stand main body 22. At this time, attachment parts 52 are inserted in such a state that the extension direction of head parts 50 coincides with the lengthwise direction of stand main body 22 because the direction of major axis part 54 and the extension direction of head part 50 are the same. This creates a state in which end faces 56a in minor axis parts 56 of attachment parts 52 (see Figures 13 and 14A) face the side walls of grooves 14 in cabinet 12, so that attachment parts 52 can be easily inserted into grooves 14.

Then, head parts 50 of attachment fixtures 24 are driven to rotate by, for example, about 90 degrees using tip 62 of a flat-bladed screwdriver or the edge of a coin. By this rotationally driving operation, major axis parts 54 of attachment parts 52, particularly the thread ridge 58, is cut into and secured by the sidewalls of grooves 14. This stand main body 22 is securely attached to cabinet 12 by attachment fixtures 24.

As shown in Figure 12, if desired, it is preferable to provide on the bottom surface of cabinet mounting part 26 of stand main body 22 stoppers 70 that limit rotation of attachment fixture 24 around through-holes 40 to a prescribed range (for example, 0-90 degrees).

In this embodiment, as shown in Figure 12, two stopper pieces 70a and 70b are formed at point-symmetrical positions about the center of through-hole 40. By stopper pieces 70a and 70b thus arranged, the range of rotation of attachment fixture 24 can be regulated to a range from the position where the extension direction of head part 50 approximately coincides with the lengthwise direction of stand main body 22 to the position where the extension direction of head part 50 becomes perpendicular to the lengthwise direction when head part 50 is rotated clockwise as indicated by arrow A. This can prevent attachment fixture 24 from turning too far and damaging the side walls of groove 14, can prevent the fastening effect of the screws from being lost, and can prevent attachment units 52 from coming out.

And when removing cabinet 12 from stand main body 22, it can be removed simply, by performing the opposite procedure from the above-described procedure.

Thus, in this embodiment, since an attachment fixture 24 has head part 50 and attachment part 52 extending from head part 50 in the longitudinal direction (the z-axis direction), and the external shape of attachment part 52 has anisotropy in two directions (the x-axis direction and the y-axis direction) contained in the plane that is perpendicular to said longitudinal direction (the z-axis direction), one can readily attach stand 20 to cabinet 12 by utilizing grooves 14 in cabinet 12, with no need to modify the design shape of cabinet 12.

Moreover, because thread ridge 58 is provided on major axis part 54 of attachment part 52, when attaching stand 20 to cabinet 12, said thread ridge 58 grips the side walls of groove 14 in cabinet 12, whereby stand 20 is securely attached to cabinet 12.

In particular, the construction is such that each attachment fixture 24 is inserted into cabinet 12 through cabinet mounting part 26 of stand main body 22, so stand main body 22 can be made thin, and further because the width of stand main body 22 does not need to be larger than the minimum length enough to prevent toppling over suffices for, the size of stand main body 22 can be made small.

And even if stand 20 is removed from cabinet 12 and the electronic apparatus is used, for example, in horizontal orientation, the part that is gripped by thread ridge 58 is the side walls of grooves 14, so any scratching or other damage caused by the gripping of the thread is never conspicuous, and the attractive appearance is never marred.

Because the extension direction of head part 50 in attachment fixture 24 coincides with the extension direction of major axis part 54 in attachment part 52, it is easy to identify or confirm the directionality when inserting attachment part 52 into groove 14 of cabinet 12, and the attachment operation becomes very simple.

Also, in this embodiment, height Ld of attachment part 52 is set larger than thickness t of cabinet mounting part 26 of stand main body 22 and no greater than the total dimension of thickness t of cabinet mounting part 26 plus depth Le of groove 14, making the attachment of stand 20 by attachment fixture 24 more secure, without any scratching of the base of groove 14 by the tip of attachment part 52 and without lifting up cabinet 12, which is also beneficial for sake of appearance.

Also, height h of head part 50 is set to be no greater than height Lh of space 32 (the space formed below cabinet mounting part 26) of stand main body 22, so when attaching stand 20 to cabinet 12 using attachment fixtures 24, head part 50 is accommodated inside said space 32 of stand main body 22, and in appearance, attachment fixtures 24 cannot be visible, which is also beneficial for sake of appearance.

In the above example, what is shown as groove 14 formed in cabinet 12 is a groove that is formed continuously from one end face of cabinet 12 to the other end face, but besides this, it suffices if only a part is grooved. For example, groove 14 may be formed in only the part that faces at least through-hole 40 when. bottom surface 12b of cabinet 12 is mounted on cabinet mounting part 26 of stand main unit 22. In this case, any plane shape, such as an oval or rectangle, is conceivable as a plane shape as the part where groove 14 is formed.

Also, it should be noted that the attachment fixture, cabinet stand, and article attachment method of this invention are not limited to the above embodiment; various modification may be adopted provided that they do not depart from the gist of the invention as set forth in the claims.

As explained above, with the attachment fixture, cabinet stand, and article attachment method of this invention, for example when attaching a stand to a device main body, there is no need to modify the design shape of the device main body, the stand can be attached to the device main body securely, and its removal becomes easy as well.

## Claims

1. An attachment fixture comprising:
a head part; and
an attachment part extending longitudinally from said head part;
wherein the attachment part includes a major axis part having a major axis along a first direction and a minor axis part having a minor axis along a second direction; said first and second directions being contained in the plane that is perpendicular to said longitudinal direction.

2. An attachment fixture as described in claim 1, further comprising a screw thread formed on said major axis part.

3. A cabinet stand for supporting a cabinet that has at least one groove defined between sidewalls, said cabinet stand comprising:
a stand main body having at least one through-hole; and
an attachment fixture adapted for attaching said stand main body to a cabinet by insertion through said through-hole and rotation in one direction; said attachment fixture further comprising a head part that has a portion larger than the diameter of said through-hole and an attachment part that extends from said head part in the direction of the rotation axis and is adapted for passage through said through-hole;
wherein the attachment part includes a major axis part having a major axis along a first direction and a minor axis part having a minor axis along a second direction, said first and second directions being contained in the plane that is perpendicular to said longitudinal direction; and further
wherein said major axis is longer than the distance between the side walls in said cabinet groove, and said minor axis is shorter than the distance between said side walls.

4. A cabinet stand as described in claim 3, wherein said head part on the attachment fixture has a shape that extends along the first direction of said two directions.

5. A cabinet stand as described in claim 3, further comprising a thread ridge formed on said major axis part.

6. A cabinet stand as described in claim 5, further comprising stoppers provided on said stand main body for restricting said attachment fixture to a prescribed range of rotation.

7. An article attachment method for attaching a first article that includes at least one through-hole to a second article that has at least one groove bounded by sidewalls, said method comprising the steps of:
aligning said at least one through-hole with said at least one groove;
inserting at least one attachment fixture through said through-hole, said attachment fixture having a minor axis part and a major axis part;
positioning the minor axis part of the attachment fixture so as to face the sidewalls of the at least one groove; and
rotating said at least one attachment fixture by a prescribed angle in one direction to position the major axis parts of said attachment fixture so as to face said groove sidewalls, thereby to attach said first article to said second article.

8. An electronic apparatus comprising an apparatus main body, a cabinet in which the apparatus main body is housed, and a cabinet stand for installing the cabinet,
wherein the cabinet includes at least one groove; and
wherein the cabinet stand comprises a stand main body including at least one through-hole, and an attachment fixture for attaching the stand main body to the cabinet by inserting the attachment fixture through said through-hole of the stand main body and rotating said attachment fixture; and further
wherein the attachment fixture comprises a head part including a portion that is larger than the diameter of said through-hole, and an attachment part extending longitudinally from said head part and being sized so as to go through said through-hole; and also
wherein the attachment part includes a major axis part having a major axis along a first direction and a minor axis part having a minor axis along a second direction, said first and second directions being contained in the plane that is perpendicular to said longitudinal direction, said major axis being longer than the distance between the side walls in said cabinet groove, and said minor axis being shorter than the distance between said side walls.
